**Europäisches Patentamt**

**European Patent Office**

**Office européen des brevets**

(19)

(11) Veröffentlichungsnummer: **0 073 290**
A2

# (12) EUROPÄISCHE PATENTANMELDUNG

(21) Anmeldenummer: 82103268.7

(22) Anmeldetag: 19.04.82

(51) Int. Cl.³: **C 10 M 11/00**

(30) Priorität: 02.09.81 DE 3134694
15.01.82 DE 3201084

(43) Veröffentlichungstag der Anmeldung: 09.03.83
Patentblatt 83/10

(84) Benannte Vertragsstaaten: **AT BE CH DE FR GB IT LI LU NL SE**

(71) Anmelder: Jenau, Hans-Peter, Klugstrutzstrasse 3,
D-4600 Dortmund 30 (DE)
Anmelder: Kärner, Dieter, An der Löchte 12,
D-5810 Witten (DE)

(72) Erfinder: Jenau, Hans-Peter, Klugstrutzstrasse 3,
D-4600 Dortmund 30 (DE)
Erfinder: Kärner, Dieter, An der Löchte 12, D-5810 Witten
(DE)

(74) Vertreter: Schulze Horn, Hannes, Dr.-Ing., Im Defdahl 51,
D-4600 Dortmund 1 (DE)

(54) Anlage und Verfahren zur Gewinnung von Kohlenwasserstoffprodukten aus Altölen.

(57) Die Erfindung betrifft eine Anlage zur Gewinnung von Kohlenwasserstoffprodukten aus Altölen o.ä. durch mechanisch/thermische Aufbereitung, insbesondere durch Destillation und/oder Rektifikation. Die Anlage besteht aus Aggregaten, wie Verdampfer, Kondensationskollonne, Heiz- und Kühlelementen, Wärmetauscher, Pumpen, Filter usw. Die Aggregate sind in einer kleinen, insbesondere transportablen Funktionseinheit zusammengefaßt. Die Funktionseinheit ist vorzugsweise fahrbar ausgebildet.

Die Beheizung des Verdampfers erfolgt insbesondere elektrisch. Entweder induktiv oder durch Widerstandselemente. Die benötigte Elektroenergie wird entweder dem Ortsnetz entnommen oder aber besonders vorteilhaft durch einen Dieselgenerator erzeugt, der fest mit der Funktionseinheit verbunden ist. Seine Abwärme wird vorteilhaft zur Vorwärmung des Altöls verwendet.

EP 0 073 290 A2

ACTORUM AG

COMPLETE DOCUMENT

0073290
Ind/82/1

## Beschreibung

Die Erfindung betrifft eine Anlage und ein Verfahren zur Gewinnung von Kohlenwasserstoffprodukten aus Altölen o.ä. durch mechanisch/thermische Aufbereitung, insbesondere durch Destillation oder Rektifikation.

Es ist bekannt, Altöl im industriellen Maßstab zur Gewinnung von Schmierölen zu regenerieren. Hierbei werden zunächst mittels Filtern und/oder Zentrifugen Verunreinigungen abgetrennt, sodann werden auf chemischem Wege Säurebestandteile und gegebenenfalls langkettige Kohlenwasserstoffbestandteile beseitigt oder ausgeschieden, die durch Alterung des Öles entstanden sind und sowohl dessen Schmierkraft herabsetzen als auch bei weiterer Verwendung des Öles Korrosion hervorrufen würden.

Nachteilig bei der Regeneration von Altölen zur Gewinnung von Schmierölen ist einerseits der zur Wiedergewinnung qualifizierter Schmieröle relativ hohe Aufwand, der die Wirtschaftlichkeit solche Verfahren beeinträchtigt, sowie andererseits, daß die Qualität des regenerierten Schmieröles wegen der unkontrollierbaren Zusammensetzung des Altöles nicht exakt vorherbestimmt werden kann. Weiterhin ist ein Nachteil, daß bei jedem Wiederaufbereitungsprozeß die Schmierfähigkeit eines ursprünglich hoch qualifizierten Schmiermittels irreversibel verschlechtert wird. Aus den vorstehenden Gründen wurde in der Praxis bereits dazu übergegangen, Altöle und deren Gemische in Anlagen der Petrochemischen Industrie zur Gewinnung von Kohlenwasserstoffprodukten aufzubereiten. Da dies jedoch nur in Raffinerien und nur in großtechnischem Maßstab wirtschaftlich sinnvoll ist, erfordert die petrochemische Aufbereitung außer in Sonderfällen einen großen organisatorischen und finanziellen Aufwand, um das Altöl über ein Netz von Sammelstellen zu erfassen, zu den Altölaufbereitungsanlagen zu transportieren, dort zu lagern und das Aufkommen mit der Kapazität einer Petrochemischen Großtechnischen Aufbereitungsanlage in Übereinstimmung zu bringen und zu halten.

Es stellte sich in der Praxis heraus, daß die Aufbereitung von Altöl fast immer aus Gründen der Organisationsschwierigkeiten beim Erfassen und Sammeln der in einer Vielzahl von Stellen anfallenden jeweils relativ geringen Mengen scheiterte. Dies hatte bisher zur Folge, daß große Mengen alten Öles keiner Wiederverwendung zugeführt, sondern entweder verbrannt oder zum Schaden der Umwelt auf sonstige Weise vernichtet wurden.

Aufgabe der Erfindung ist es, eine Anlage und ein Verfahren zur wirtschaftlichen Gewinnung von Kohlenwasserstoffprodukten aus Altölen o.ä. zur Verfügung zu stellen, die unter Vermeidung größerer Sammelorganisationen und Einrichtungen eine Aufbereitung des Altöles umweltfreundlich am Ort des Anfalles bzw. an dezentralisierten kleinen Sammelstellen unter Gewinnung hochwertiger Treibstoffe und/oder wertvoller sonstiger Petrochemischer Produkte erlaubt.

Die Lösung der Aufgabe gelingt erfindungsgemäß durch eine Anlage umfassend Aggregate, wie Pumpen und gegebenenfalls Vakuumpumpen, Filter, Verdampfer, Kondensationskolonne Heiz- und Kühlemente, Wärmetauscher, Meß- und Regelgeräte, Behälter, Leitungen etc., bei der die Aggregate eine kleine, insbesondere transportable Funktionseinheit bilden.

In Abkehr von bisherigen Vorstellungen kann erfindungsgemäß auch eine Anlage in Form einer kleinen, vorzugsweise transportablen Funktionseinheit überraschenderweise die wirtschaftliche Aufbereitung von Altöl o.ä. unmittelbar am Ort des Anfalles bzw. an dezentralisierten kleinen Sammelstellen vornehmen.

In Ausgestaltung der Anlage nach der Erfindung ist dabei vorgesehen, daß die Funktionseinheit fahrbar ausgebildet ist. Hierdurch wird die Mobilität der Anlage so weit erhöht, daß diese mit dem geringst möglichen technischen und/oder finanziellen Aufwand von einer Einsatzstelle zur andern gefahren werden kann und ohne Kosten oder Zeit für das Erreichen der Produktionsbereitschaft zu verlieren, unmittelbar nach Erreichen des Einsatzortes funktionsbereit ist.

In weiterer Ausgestaltung der Erfindung ist zur weiteren Verbesserung der Mobilität eine Ausgestaltung vorgesehen, bei der die Aggregate zum Schutz vor Transportschäden kompakt zusammengefügt und vorzugsweise in einem starren containerartigen Gestell angeordnet sind. Um hierfür optimale Vorraussetzungen zu schaffen, sieht eine zweckentsprechende Ausgestaltung weiter vor, daß die Aggregate oder diese aufnehmende Gehäuse und Gestelle mit im wesentlichen rechteckigen Konturen mit ebenen Begrenzungsflächen ausgeführt sind, deren Befestigungselemente vorzugsweise der Bodenfläche und deren Anschluß- und/oder Verbindungselemente vorzugsweise der Deckfläche zugeordnet sind. Durch diese Ausgestaltung ergeben sich vorteilhaft für den Einbau der Aggregate in das containerartige Gestell beste Voraussetzungen und es ist eine räumliche Anordnung auf kleinstem Raum möglich, ohne daß die Übersichtlichkeit der Anlage leidet. Des weiteren wird die Stabilität der Funktionseinheit durch die kastenförmige Ausbildung der einzelnen Aggregate weiter erhöht. Darüberhinaus wird die Montage oder das Auswechseln einzelner Aggregate zum Zwecke der Revision oder der Reparatur erleichtert, wodurch sich die Verfügbarkeit der Anlage wesentlich erhöht.

In weiterer Ausgestaltung der Erfindung ist vorgesehen, daß die Funktionseinheit mit einem Bedienungs- und Leitstand ausgestattet ist, der an der Außenseite des vorzugsweise containerartigen Gestells angeordnet ist. Durch einen Bedienungs- und Leitstand können die einzelnen Funktionen der Anlage leicht und einfach überwacht und ganz oder teilautomatisiert gesteuert werden. Durch eine Anordnung an der Außenseit wird eine Optimum an Übersichtlichkeit und leichter Bedienbarkeit erzielt,

In weiterer Ausgestaltung der Erfindung ist vorgesehen, daß der Verdampfer vorzugsweise eine elektrische Heizeinrichtung aufweist, für deren Energiebedarf insbesondere ein Stromerzeugungsaggregat vorgesehen ist. Durch diese Ausgestaltung zeichnet sich die Anlage in vorteilhafter Weise durch eine universelle, vom Stromnetz unabhängige Verwendbarkeit aus. Gerade bei der vorgesehenen Häufigkeit der Standortänderung ergibt sich hierdurch der Vorteil einer völligen Unabhängigkeit von Anschlußwerten vorhandener Stromanschlüsse und die Anlage ist jederzeit ohne Schwierigkeiten und ohne daß die vorhandenen Netze überlastet werden könnten, betriebsbereit. So können die Vorteile eine elektrischen Heizeinrichtung, die zu einer jeweils besonders schnellen Betriebsbereitschaft der Anlage führt und eine besonders gute Regelbarkeit der Anlage ermöglicht, voll ausgenutzt werden.

In weiterer Ausgestaltung der Erfindung ist vorgesehen, daß die Funktionseinheit und das Stromerzeugungsaggregat auf einem gemeinsamen Grundrahmen zu einer Transporteinheit miteinander verbunden sind und daß die Transporteinheit insbesondere ein Fahrgestell aufweist oder auf ein solches aufgesetzt ist. So ergibt sich eine optimal leicht transportierbare, ortsveränderliche Anlage, die das Anlegen von Altölsammelstellen überflüssig macht und überall dort ohne Zeitverzögerung eingesetzt werden kann, wo Altöl anfällt.

In weiterer Ausgestaltung der Erfindung ist vorgesehen, daß die elektrische Heizeinrichtung als Induktionsheizeinrichtung ausgebildet ist. Eine Induktionsheizeinrichtung ist für die erfindungsgemäße Anlage besonders vorteilhaft, da die benötigte Wärme direkt im Stahlmantel des Verdampfers erzeugt wird, so daß eine sehr schnelle Aufheizung des Altöls erfolgt. Im Inneren des Verdampfers brauchen dabei keine Heizelemente angeordnet werden, so daß die Wartung besonders einfach ist und keinerlei Korrosionsprobleme an Heizelementen auftreten können.

In weiterer Ausgestaltung der Erfindung ist vorgesehen, daß die elektrische Heizeinrichtung als elektrische Widerstandsheizung ausgebildet ist, die vorzugsweise um den oder in dem Verdampfer angeordnete Heizelemente aufweist. Widerstandsheizelemente sind als Meterware erhältlich und brauchen lediglich noch mit einer Isolierung, wenn sie außen am Verdampfer angeordnet sind, bzw. mit einer Korrosionsschutzschicht, wenn sie im Verdampfer angeordnet sind, versehen werden. So ergibt sich eine besonders preiswerte Ausführung der Verdampferbeheizung.

Es ist dabei vorgesehen, daß die Heizwiderstände in Keramik, Glas o.ä. eingegossen sind und vorzugsweise vertikal angeordnet werden. So ergibt sich eine korrosionssichere Ausführung der Heizelemente, wobei die vertikale Anordnung den besonderen Vorteil aufweist, daß die einzelnen Heizstäbe zumindest teilweise stets in das Altöl im Unterteil des Verdampfers eintauchen und sich nicht überhitzen können.

In anderer Ausgestaltung der Erfindung ist vorgesehen, daß der Verdampfer vorzugsweise an seiner Außenseite angeordnete öl- oder gasbeheizte Heizschlangen aufweist. Durch eine Beheizung mit Gas oder Öl ist es möglich, die bei der Destillation oder Rektifikation in der Anlage erzeugten Wertstoffe zur Beheizung des Verdampfers heranzuziehen. Es ergibt sich dann vorteilhaft eine Anlage, deren elektrischer Energiebedarf sehr gering ist und sich auf Elektroenergie für die Meß- und Regelgeräte, Ventilatoren etc. beschränkt. Bei einer solchen Anlage kann in der Regel auf ein Stromerzeugungsaggregat verzichtet werden, da jede normal abgesicherte Kraftstromsteckdose als Elektroanschluß ausreichend ist.

In weiterer Ausgestaltung der Erfindung ist vorgesehen, daß zum Antrieb des Stromerzeugungsaggregates eine Brennkraftmaschine vorgesehen ist, wobei vorzugsweise an die Abgasleitung der Brennkraftmaschine ein Wärmetauscher und gegebenenfalls an deren Kühlmittelkreislauf ein weiterer Wärmetauscher zur Erwärmung des Altöles angeschlossen ist. Durch diese Ausgestaltung wird die Wirtschaftlichkeit der Anlage, insbesondere hinsichtlich des Energiebedarfes noch weiter verbessert. Bei einer Brennkraftmaschine, beispielsweise einem Dieselmotor, gehen normalerweise ca. 70 % der eingespeisten Primärenergie durch Wärmeverluste an die Umwelt verloren. Dadurch, daß im Zusammenhang mit der erfindungsgemäßen Anlage der weitaus größte Teil der Abwärme der Brennkraftmaschine durch Wärmetauscher an das Altöl übertragen wird, werden diese Wärmeverluste vermieden und die sonst verlorengegangene Wärme wird für die Aufbereitung nutzbar gemacht. Da die Abgase mit einer Temperatur von 800° C anfallen, kann bei entsprechender Abstimmung der Wärmeströme, beispielsweise bei einer Vorwärmung des Altöles im kontinuierlichen Durchlauf durch einen ersten, im Kühlmittelkreislauf angeordneten Wärmetauscher und einen zweiten, an die Abgasleitung angeschlossenen Wärmetauscher, eine Vorwärmung bis auf Temperaturen über 200° C erfolgen. Lediglich die Temperaturerhöhung bis zur Verdampfung, sowie die Verdampfungswärme muß von der elektrischen Heizeinrichtung oder den öl- oder gasbeheizten Heizschlangen aufgebracht werden.

Es ist dabei vorgesehen, daß Leistungsverbraucher, wie Pumpen, Ventilatoren, Betätigungs und/oder Schaltorgane Beleuchtungseinrichtungen etc. an ein im containerartigen Gestell fest verlegtes elektrisches Netz angeschlossen sind, welches eingangangsseitig ebenfalls an das Stromerzeugungsaggregat angeschlossen ist. So ergibt sich eine Anlage, die bei Wahl einer elektrischen Beheizung von dem Stromnetz völlig unabhängig ist.

In Durchführung des Verfahrens zur Gewinnung von Kohlenwasserstoffprodukten aus Altölen o.ä. mit der erfindungsgemäßen Anlage ist vorgesehen, daß das Altöl oder Altölgemisch mit Anteilen des gewonnenen Produktes gemischt und verdünnt und in Mischung oder Verdünnung verarbeitet bzw. aufbereitet wird. Diese Verfahrensweise hat den besonderen Vorteil, daß die Filtrationsfähigkeit des zähen Altöles wesentlich verbessert wird, so daß die der Destillation oder Rektifikation vorauszugehende Filterung mit handelsüblichen, relativ kleinporigen Filtern durchgeführt werden kann. Auch die Destillationsfähigkeit und damit die Produktqualität wird positiv beeinflußt und damit das Leistungsvermögen der verhältnismäßig unkompliziert aufgebauten transportablen Anlage erhöht. Des weiteren ist eine Einstellung auf sehr unterschiedliche Altölqualitäten bei gleichbleibender Produktqualität möglich.

In weiterer Ausgestaltung der Erfindung ist vorgesehen, daß die Destillation oder Rektifikation unter Überdruck durchgeführt wird. Hierdurch ergibt sich eine vorteilhafte Siedepunktserhöhung und eine vorteilhafte erhebliche Verkleinerung der einzelnen Aggregate auf der Gasseite, so daß die Anlage insgesamt verkleinert werden kann.

In weiterer Ausgestaltung der Erfindung ist schließlich vorgesehen, daß das Verfahren bei einer Temperatur und einem Druck durchgeführt wird, die z.B. zwischen 400° C und 800° C und 1 bis 4 bar, insbesondere bei ca. 420° C und 1,5 bar liegen, so daß zumindest ein Cracken der langkettigen Kohlenwasserstoffmoleküle erfolgt. Hierdurch wird vorteilhaft das Ausbringen an Wertstoffen erheblich gesteigert und der Anteil der im Verdampfersumpf zurückbleibenden sehr langkettigen Kohlenwasserstoffe vermindert. Eine Analyse ergab, daß das erfindungsgemäß erhaltene Destillat in allen Punkten die Anforderungen, die an die Verwendbarkeit als Heizöl- oder Dieselkraftstoff zu stellen sind, erfüllt. Die nicht verwertbaren Rückstände, die periodisch aus dem Verdampfer entfernt werden, wobei Überdruckbetrieb für eine besonders gute Entleerung sorgt, betragen nur ca. 5 %.

Im folgenden wird die Erfindung anhand von Zeichnungen näher erläutert, die besonders bevorzugte Ausführungsbeispiele zeigen und aus denen weitere vorteilhafte Einzelheiten entnehmbar sind.

Die Zeichnungen zeigen im einzelnen:

Fig. 1     eine fahrbare Anlage in einem containerartigen Gestell mit Stromerzeugungsaggregat in Seitenansicht,

Fig. 2     die Anlage gemäß Fig. 1 in einer Sicht von hinten,

Fig. 3a-3d     die Anordnung der Aggregate in dem containerartigen Gestell in Ansicht von hinten, von rechts und von vorn,

Fig. 4     ein containerartiges Gestell,

Fig. 5     ein schematisch dargestellter Verdampfer mit induktiver Beheizung im Schnitt,

0073290
Ind/82/1

Fig. 6      das Unterteil eines schematisch dargestellten Verdampfers mit Gas- oder Ölbeheizung und äußerer Isolierung,

Fig. 7      eine Teilansicht eines schematisch dargestellten Verdampfers mit eingehängten Widerstandsheizelementen,

Fig. 8      einzelne Widerstandselemente,

Fig. 9      die Anordnung von Widerstandselementen in einem horizontalen Verdampfer,

Fig. 10      die schematische Darstellung von Widerstandsheizelementen oder Heizspiralen in einem Ringheizelement, sowie

Fig. 11      die schematische Ansicht eines vertikalen Verdampfers mit Widerstandsheizelementen, die zu einem mit dem Deckel verbundenen Heizelementbündel zusammengefaßt sind.

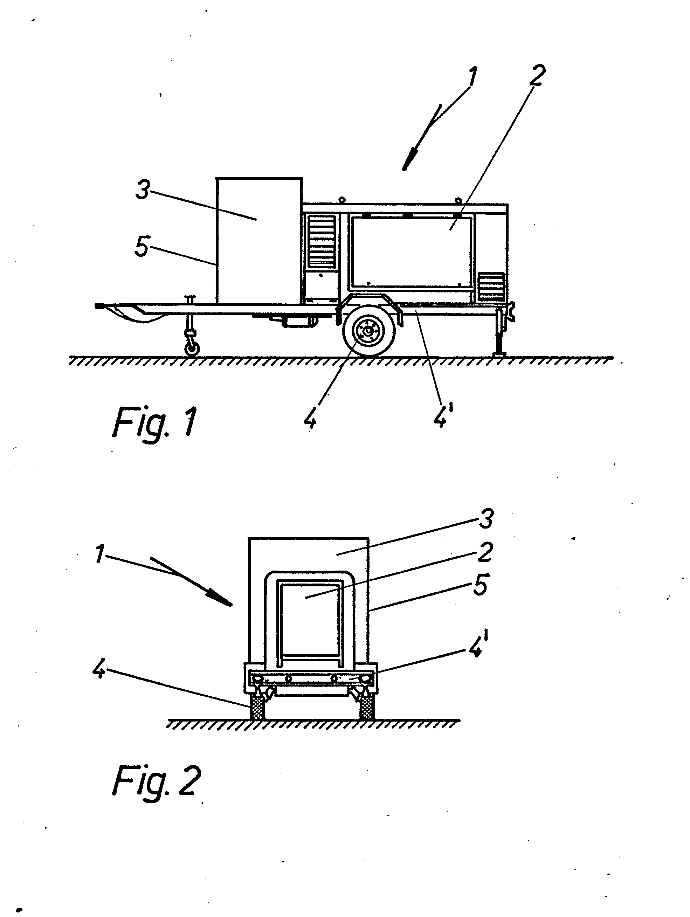

Die fahrbare Transporteinheit 1 in Fig. 1 umfaßt die eigentliche Anlage 3 zur Gewinnung von Kohlenwasserstoffprodukten, das Stromerzeugungsaggregat 2 und das Fahrgestell 4. Bei letzterem handelt es sich um ein übliches Einachsfahrgestell, wie es beispielsweise zum Anhängen an einen PKW üblich ist. Die Anlage kann jedoch ebenso auf einem Klein-LKW montiert werden, so daß ein Zugwagen entfällt.

Die Darstellung zeigt die kompakte, raumsparende transportfähige Bauweise der gesamten Einheit. Das Stromerzeugungsaggregat 2 nimmt den größten Raum ein, während die
eigentliche Gewinnungsanlage 3 in dem containerartigem
Gestell 5 wesentlich weniger Raum einnimmt. Ein gemeinsamer
Grundrahmen 4' verbindet die eigentliche Anlage 3 und das
Stromerzeugungsaggregat 2 zu einer Transporteinheit.

Fig. 2 zeigt die Ansicht der fahrbaren Transporteinheit 1
in Ansicht von hinten. Auch diese Darstellung zeigt anschaulich die Größenverhältnisse einerseits der eigentlichen Gewinnungsanlage 3 und andererseits des Stromerzeugungsaggregates 2 in Verbindung mit dem Fahrgestell 4.

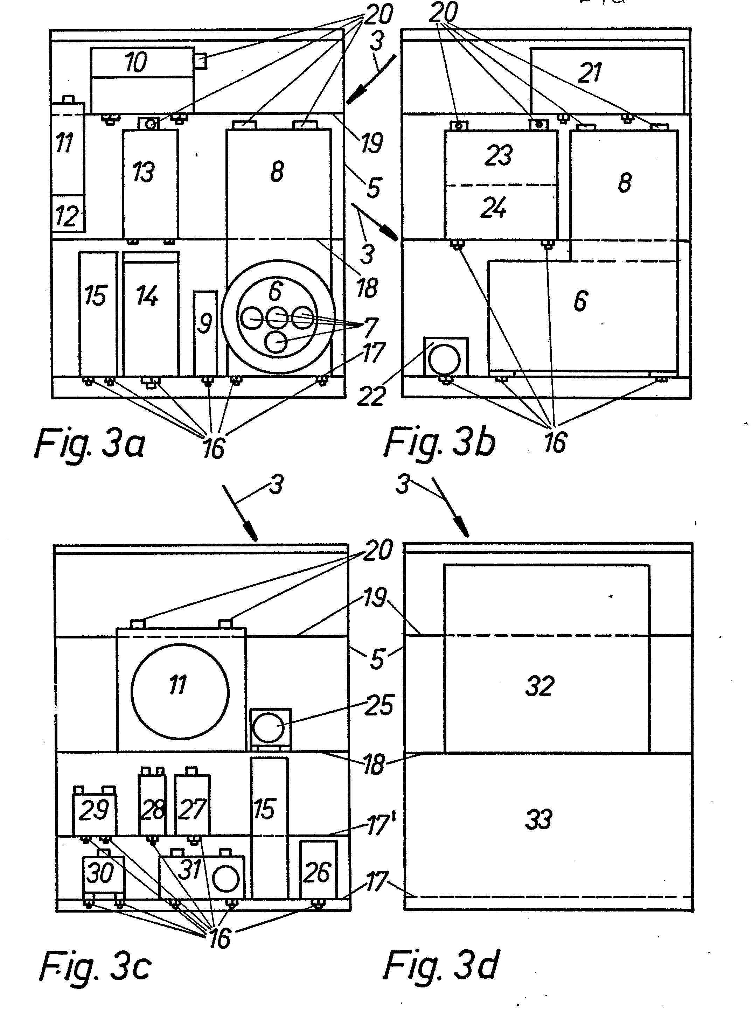

Die Anordnung der zur Destillationsanlage gehörenden Aggregate in dem containerartigen Gestell 5 zeigen die Figuren
3a bis 3d. In Fig. 3a, die das containerartige Gestell 5 in
Ansicht von hinten zeigt, erkennt man folgende Aggregate:
Den Verdampfer 6 mit Heizelementen 7 und der darüber
angeordneten Kolonne 8. Bei den Heizelementen 7 handelt es
sich um elektrische Heizelemente. Ein Niveauregler 9 sorgt
für stets gleichbleibende Füllhöhe der zu verdampfenden
Flüssigkeit im Inneren des Verdampfers 6. An die Kolonne 8
angeschlossen ist der Entspanner 10 und an diesen der
Kühler 11 mit angebautem Wärmetauscher 12. Ein weiterer
Wärmetauscher 13, der an die Abgasleitung der
Brennkraftmaschine des Stromerzeugungsaggregates 2 angeschlossen sein kann, ist dem Wärmetauscher 12 nachgeschaltet. Die Destillationsanlage 3 umfaßt ferner einen
dritten Wärmetauscher 14 und ein Filteraggregat 15. Die
Darstellung in Fig. 3a zeigt in überzeugender Weise die
vorteilhafte Wechselbeziehung zwischen der Ausgestaltung
der Aggregate und/oder der diese aufnehmemden Gehäuse
und/oder Gestelle, welche im wesentlichen rechteckige
Konturen mit ebenen Begrenzungsflächen aufweisen. Hierdurch
wird eine äußerst kompakte räumliche Aufteilung bei
bestmöglicher Übersichtlichkeit erzielt. Weiterhin zeigt sich die vorteilhafte Ausgestaltung der Aggregate durch die Möglichkeit der Anordnung der Befestigungselemente 16 vorzugsweise an deren Bodenflächen, wobe bei äußerst geringem Einsatz von Montagearbeit eine optimale Befestigung der Aggregate in den einzelnen Befestigungsebenen 17, 18 und 19 ermöglicht wird.

Ähnlich vorteilhaft wirkt sich die weitere konstruktive Maßnahme aus, die wesentlich für die Erfindung ist, nämlich die Anordnung der Anschluß und/oder Verbindungselemente 20 an den Deckflächen der Aggregate oder zumindest dem oberen Bereich derselben aus.

Fig. 3b zeigt die Anlage 3 nach der Erfindung in einer Ansicht von rechts. Deutlich erkennbar ist die Anordnung des Verdampfers 6 zusammen mit der Kolonne 8. Daneben befindet sich ein Verdichter 23, der mit dem Wärmetauscher 24 eine Aggregateinheit bildet.

Auf der oberen Befestigungsebene 19 ist eine Aggregateinheit 21, bestehend aus einer Gasfalle mit Pumpe und Druckbehälter, befestigt. Die Befestigungselemente 16 der Aggregate sind an deren jeweiligen Unterseite deutlich erkennbar, ebenso die Anschluß- und/oder Verbindungselemente 20 im Bereich der Deckflächen. Mit der Ziffer 22 ist ein Absorber bezeichnet. Auch diese Darstellung zeigt die durch die besondere erfindungsgemäße Ausgestaltung erreichte, übersichtliche, raumsparende und kompakte Anordnung der einzelnen Aggregate innerhalb des containerartigen Gestelles 5.

Fig. 3c zeigt die gleiche Anlageneinheit 3 nach der Erfindung in Ansicht von links und somit die Anordnung des Kühlers 11. Daneben befindet sich ein Pumpenaggregat 25, darunter das Filter 15 und rechts daneben das Vorfilter 26. Auf der unteren Befestigungsebene 17 sind weiterhin ein Abscheider 30 und ein Pumpenaggregat 31 angeordnet und mit ihren Befestigungselementen 16 befestigt. In einer darüber liegenden Zwischenbefestigungsebene 17' sind die beiden Filter 27 und 28 sowie ein zugehöriges Pumpenaggregat 29 angeordnet. Auch deren Befestigungselemente 16 sind jeweils an ihrer Unterseite angeordnet, wogegen die Anschluß- und/oder Verbindungselemente 20 sich an deren Deckflächen befinden.

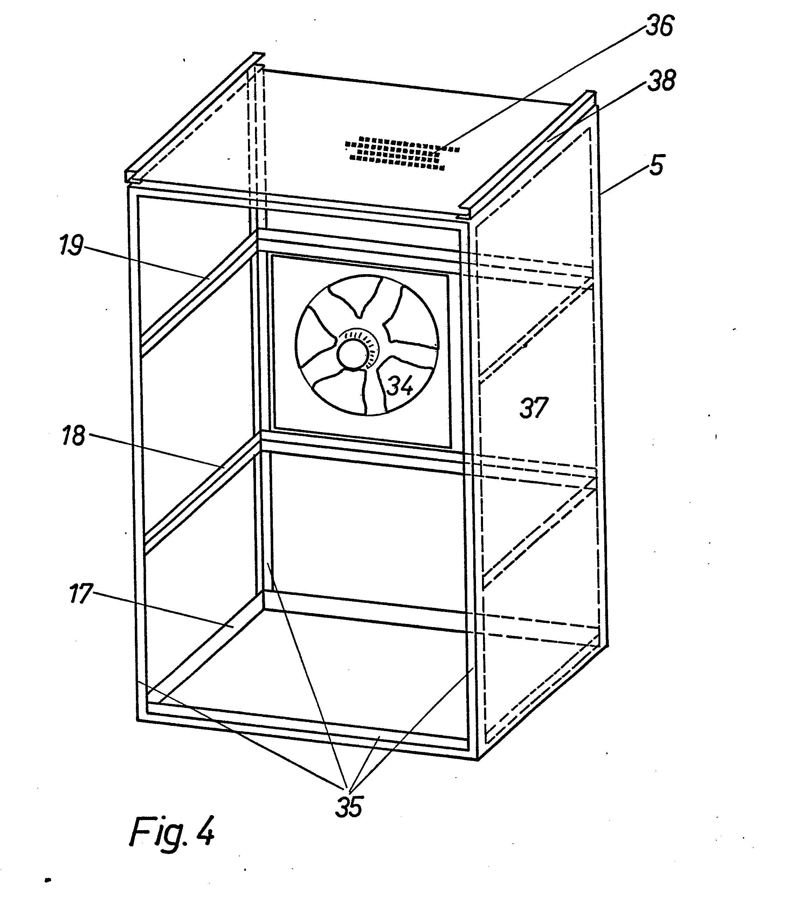

Fig. 3d zeigt die Anlage 3 nach der Erfindung in Ansicht von vorn und damit den Schalttrakt 32, der oberhalb einer Blechverschalung 33 angeordnet ist. Einen Eindruck von dem Aufbau des containerartigen Gestelles 5 vermittelt die Darstellung in Fig. 4. Sie zeigt in perspektivischer Ansicht die Befestigungsebenen 17, 18 und 19, ferner eine zum Kühler 11 gehörende Ventilatoreinheit 34. Das Gestell 5 ist vorteilhaft aus Profilen 35 zusammengeschweißt und an den Seiten mit Verschalungsblechen 37 ummantelt. Die Oberseite wird von einem Lochblech 36 gebildet. Dieses ist zwecks besserer Zugänglichkeit zu einzelnen Aggregaten in U-Profile 38 eingeschoben und darin fixiert.

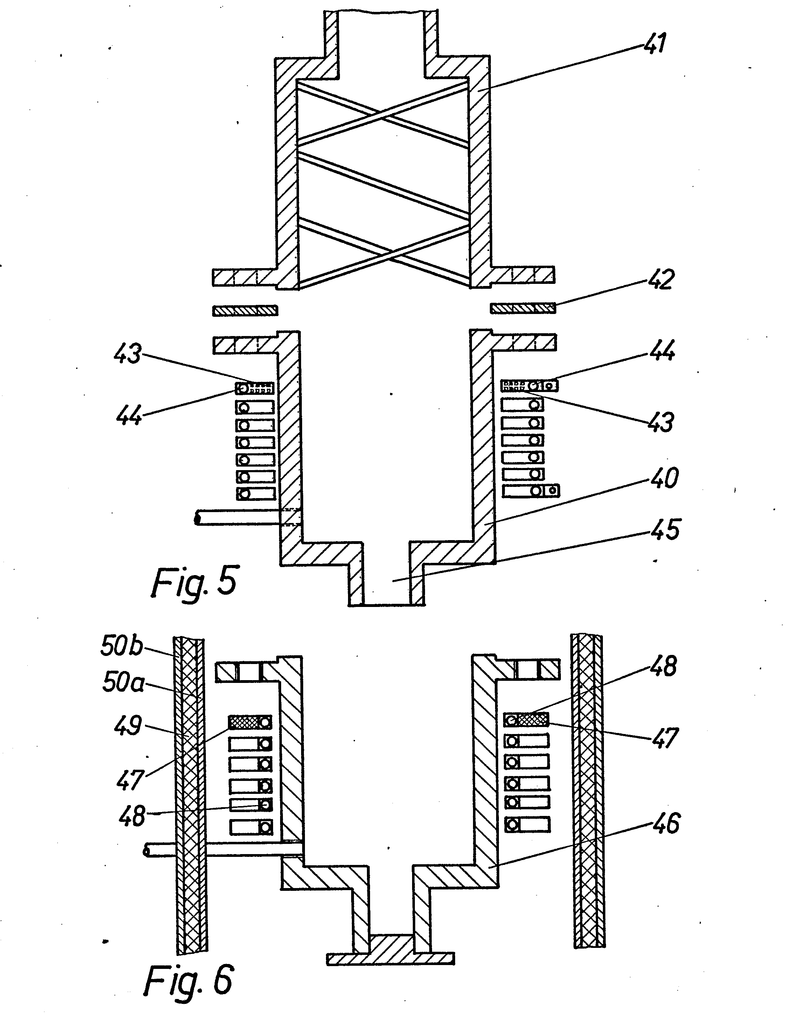

Fig. 5 zeigt den schematisch dargestellten Verdampfer, der aus zwei Teilen 40 und 41 besteht. Zwischen den beiden Teilen 40 und 41 ist eine Flanschverbindung vorgesehen, wobei zwischen den Flanschen eine Dichtungsscheibe 42 angeordnet ist. Der Behälterteil 40 ist von Induktionsspulen 43 umgeben, die durch die Kühlmittelleitungen 44 gekühlt werden können. Das Kühlmittel in den Leitungen 44 kann vorteilhaft ebenfalls zur Vorerwärmung des aufzubereitenden Altöles o.ä. verwendet werden. Im Boden des Behälters 40 befindet sich eine Abzugsöffnung 45, durch die periodisch die nicht destillier oder rektifizierbaren Rückstände abgezogen werden.

Fig. 6 zeigt die Beheizung des unteren Behälterteils 46 durch gas- oder ölbeheizte Heizschlangen 48, die an ihrer Außenseite eine Isolierung 47 tragen. Zur weiteren Isolierung des Verdampfers ist noch eine äußere Isolierung in Sandwichbauweise vorgesehen, die aus zwei Deckschichten 50a und 50b und dem dazwischen angeordneten Isoliermaterial 49 besteht. Diese Sandwichisolierung ist, ohne daß sie inallen Darstellungen gezeigt wird, regelmäßig vorgesehen, um den Wärmeverbrauch des Verdampfers herabzusetzen.

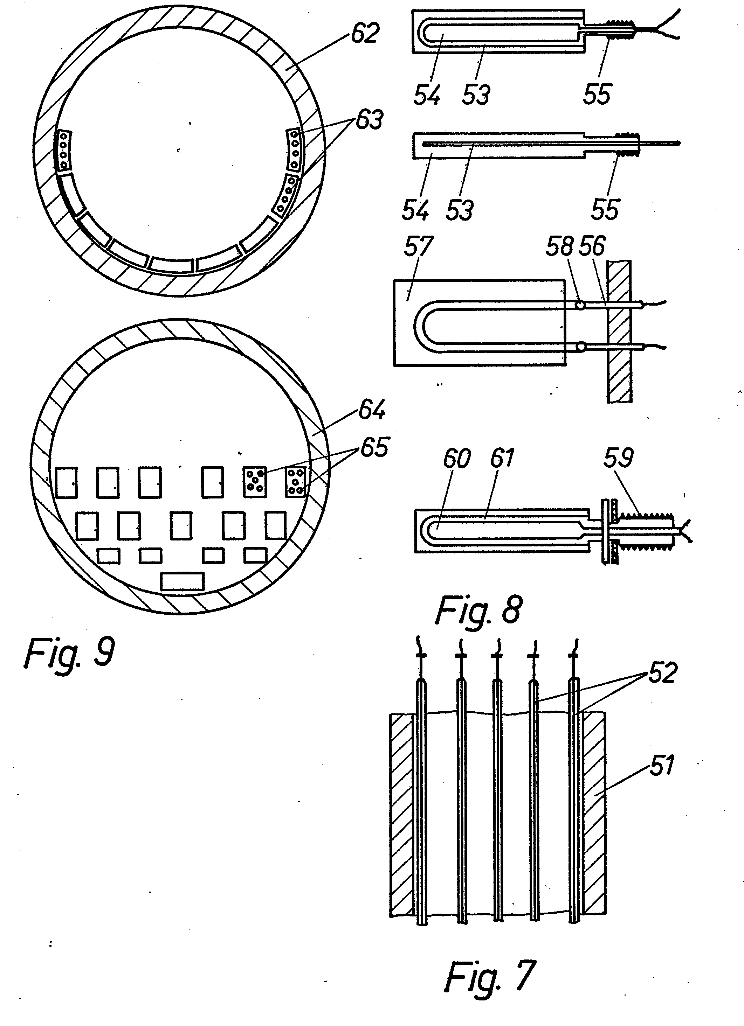

Fig. 7 zeigt einen Ausschnitt einer Verdampferwandung 51 in vertikaler Anordnung mit hängend angeordenten Heizelementen 52. Die hängende Anordnung hat den Vorteil, daß die Heizelemente auch bei absinkendem Badspiegel zumindest teilweise noch in das Bad eintauchen und somit ein Trockenfallen der Heizelemente mit Sicherheit vermieden wird.

Fig. 8 zeigt verschiedene Heizelemente, die entweder als Einschraub- oder als Einsteckelemente im Boden, im Deckel oder in den Seitenwandungen des Verdampfers ausgebildet sind. Die Heizspiralen 53, 58 und 61 sind jeweils in Keramik oder Glas 54, 57 oder 60 eingelassen, insbesondere eingeformt und über Schraubanschlüsse 55, Steckanschlüsse 56 oder kombinierte Schraub- und Steckanschlüsse 59 mit dem Deckel, dem Boden oder den Seitenwänden des Verdampfers verbunden. Ein besonders vorteilhaftes Keramikmaterial ist Al O , das nicht nur korrosionsfest ist, sondern auch als Katalysator wirkt. Es erhöht insbesondere den Benzinanteil im erzeugten Treibstoff.

Fig. 9 zeigt die Anordnung von Heizelementen in vertikalen Verdampfern. Es ist sowohl möglich, entsprechend der Heizelemente 65 diese im Unterteil des Verdampfers zu verteilen, so daß das gesamte Volumen des Verdampferunterteils durch die Heizelemente gleichmäßig erwärmt wird. In gleicher Weise ist es auch möglich, die Heizelemente kreisringförmig an der Verdampferwand 62 anzuordnen, wobei insbesondere breite Heizelemente 63 mit einer Vielzahl von Heizleitern, die ebenfalls in Keramik oder Glas eingegossen

OC73290
Ind/82/1

oder eingeformt sind, verwendet werden. So ergibt sich ein relativ großer freier Raum, in dem ein echter Kochvorgang mit einer guten Durchwirbelung des Altöls stattfinden kann. Die Aufheizzeit ist gegenüber der Anordnung mit den verteilten Heizelementen 65 etwas verlängert, die Destillation verläuft jedoch demgegenüber etwas vorteilhafter.

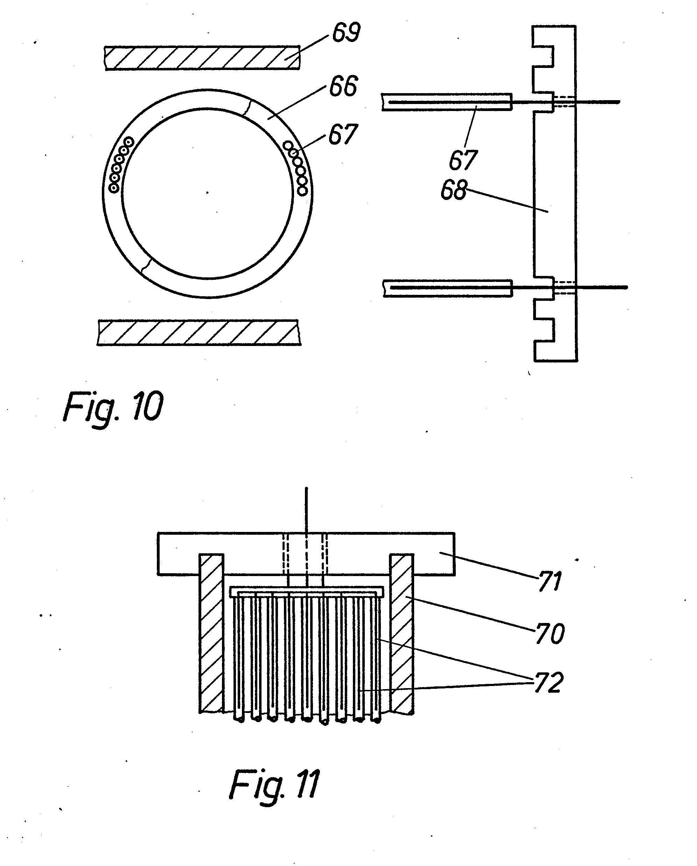

Fig. 10 zeigt eine Anordnung mit Heizspiralen 67 in der hohlen Wandung eines Ringheizelements 66 im Verdampfer 69. Bei dieser Anordnung kann vorteilhaft eine vollkommen korrosionsgeschützte Anordnung der Heizspiralen 67 im Ring 66 erreicht werden, so daß auf ein Eingießen oder Einformen der Heizelemente 67 verzichtet werden kann. So sind Reparaturen an der Heizspirale möglich. Die Heizspiralen 67 sind in dem Deckel 68 aufgenommen und können durch das Abheben des Deckels 68 aus dem Ringheizelement 66 herausgehoben werden.

Eine andere Anordnung der Heizelemente 72 in dem Verdampfer 70 zeigt Fig. 11. Hier sind die Heizelemente 72 zu einer bürstenartigentigen Einheit zusammengefaßt, die zusammen mit dem Deckel 71 ausgehoben werden kann. So ergibt sich eine besonders gut hantierbare Einheit Deckel-Heizelemente die ein einfaches Auswechseln von Heizelementen erlaubt und insbesondere für vertikale Verdampfer geeignet ist.

Die Erfindung ist nicht auf die gezeigten Beheizungsarten und auf die gezeigte Anordnung der einzelnen Aggregate in der Funktionseinheit beschränkt. Ohne den Rahmen der Erfindung zu verlassen, können sowohl innerhalb der Funktionseinheit die einzelnen Aggregate anders angeordnet als auch andere Beheizungsarten gewählt werden. Die gezeigten Beispiele stellen eine besonders günstige Auswahl dar.

0073290

Anlage zum Patentgesuch                    Ind/82/1
von Hans Peter Jenau, Dortmund
und Dieter Kärner, Witten


Anlage und Verfahren zur Gewinnung von
Kohlenwasserstoffprodukten aus
Altölen o.ä..

1. Anlage zur Gewinnung von Kohlenwasserstoffprodukten aus
   Altölen o.ä. durch mechanisch/-thermische Aufbereitung,
   insbesondere durch Destillation oder Rektifikation,
   umfassend Aggregate, wie Pumpen und gegebenenfalls
   Vakuumpumpen, Filter, Verdampfer, Kondensationskolonne,
   Heiz- und Kühlelemente, Wärmetauscher, Meß- und Regelgeräte, Behälter, Leitungen etc., d a d u r c h  g e -
   k e n n z e i c h n e t, daß die Aggregate (6 bis 15,
   21 bis 31) eine kleine, insbesondere transportable
   Funktionseinheit (3) bilden.


2  Anlage nach Anspruch 1, d a d u r c h  g e k e n n -
   z e i c h n e t, daß die Funktionseinheit (3) fahrbar
   ausgebildet ist.


3. Anlage nach einem der Ansprüche 1 oder 2, d a -
   d u r c h  g e k e n n z e i c h n e t, daß die
   Aggregate (6 bis 15, 21 bis 31) kompakt zusammengefügt
   und vorzugsweise in einem starren, containerartigen
   Gestell (5) angeordnet sind.

4. Anlage nach einem der Ansprüche 1, 2 oder 3, d a - d u r c h  g e k e n n z e i c h n e t, daß die Aggregate (6 bis 15, 21 bis 31) und/oder diese aufnehmende Gehäuse oder Gestelle mit im wesentlichen rechteckigen Konturen mit ebenen Begrenzungsflächen ausgeführt sind, deren Befestigungselemente (16) vorzugsweise der Bodenfläche und deren Anschluß und/oder Verbindungselemente (20) vorzugsweise der Deckfläche zugeordnet sind.

5. Anlage nach einem der Ansprüche 1, 2, 3 oder 4, d a - d u r c h  g e k e n n z e i c h n e t, daß die Funktionseinheit (3) mit einem Bedienungs- und Leitstand (32) ausgestattet ist, der an der Außenseite des vorzugsweise containerartigen Gestells (5) angeordnet ist.

6. Anlage nach einem der Ansprüche 1, 2, 3, 4 oder 5, d a - d u r c h  g e k e n n z e i c h n e t, daß der Verdampfer (6) vorzugsweise eine elektrische Heizeinrichtung (7) aufweist, für deren Energiebedarf insbesondere ein Stromerzeugungsaggregat (2) vorgesehen ist.

7. Anlage nach einem der Ansprüche 1, 2, 3, 4, 5 oder 6, d a d u r c h  g e k e n n z e i c h n e t, daß die Funktionseinheit (3) und das Stromerzeugungsaggregat (2) auf einem gemeinsamen Grundrahmen (4') zu einer Transporteinheit (1) miteinander verbunden sind und daß die transportable Einheit (1), insbesondere ein Fahrgestell (4) aufweist oder auf ein solches aufgesetzt ist.

8. Anlage nach Anspruch 6, d a d u r c h  g e k e n n - z e i c h n e t, daß die elektrische Heizeinrichtung (7) als Induktionsheizeinrichtung ausgebildet ist.

0073290
Ina/82/4

9. Anlage nach Anspruch 6, d a d u r c h   g e k e n n -
z e i c h n e t, daß die elektrische Heizeinrichtung
(7) als elektrische Widerstandsheizung ausgebildet ist,
die vorzugsweise um oder in dem Verdampfer (6)
angeordnete Heizelemente aufweist.

10. Anlage nach Anspruch 6, 7 oder 9, d a d u r c h   g e -
k e n n z e i c h n e t, daß die elektrische
Heizeinrichtung (7) in Keramik, Glas o.ä. eingegossene
Heizwiderstände (53, 58, 61) zur Beheizung aufweist,
die im Inneren des Verdampfers (6) vorzugsweise
vertikal angeordnet sind.

11. Anlage nach einem der Ansprüche 1 bis 5, d a d u r c h
g e k e n n z e i c h n e t, daß der Verdampfer (6)
vorzugsweise an seiner Außenseite angeordnete Öl- oder
gasbeheizte Heizschlangen (48) aufweist.

12. Anlage nach Anspruch 6 oder 7, d a d u r c h   g e -
k e n n z e i c h n e t, daß zum Antrieb des
Stromerzeugungsaggregates eine Brennkraftmaschine
vorgesehen ist, wobei vorzugsweise an die Abgasleitung
der Brennkraftmaschine ein Wärmetauscher (13) und
gegebenenfalls an deren Kühlmittelkreislauf ein
weiterer Wärmetauscher (12) zur Erwärmung des Altöles
angeschlossen ist.

13. Anlage nach einem der vorhergehenden Ansprüche, d a -
d u r c h   g e k e n n z e i c h n e t, daß
Leistungsverbraucher wie Pumpen (21, 29, 31),
Ventilatoren (34) Betätigungs und/oder Schaltorgane,
Beleuchtungseinrichtungen etc. an ein im
containerartigen Gestell (5) fest verlegtes
elektrisches Netz angeschlossen sind, welches
eingangseitig an das Stromerzeugungsaggregat (2)
angeschlossen ist.

OC73290
Ind/8271

14. Verfahren zur Gewinnung von Kohlenwasserstoffprodukten
aus Altölen o.ä. mit einer Anlage nach zumindest einem
der vorhergehenden Ansprüche, d a d u r c h  g e -
k e n n z e i c h n e t, daß das Altöl oder Altölgemisch mit Anteilen des gewonnenen Produktes gemischt
und verdünnt und in Mischung oder Verdünnung verarbeitet bzw. aufbereitet wird.

15. Verfahren zur Gewinnung von Kohlenwasserstoffprodukten
aus Altölen o.ä. mit einer Anlage nach zumindest einem
der vorhergehenden Ansprüche, d a d u r c h  g e -
k e n n z e i c h n e t, daß die Destillation oder
Rektifikation stufenweise erfolgt, wobei in den einzelnen Stufen unterschiedliche Wertstoffe abgezogen
werden.

16. Verfahren nach Anspruch 14 oder 15, d a d u r c h  g e -
k e n n z e i c h n e t, daß die Destillation oder
Rektifikation unter Überdruck durchgeführt wird.

17. Verfahren nach Anspruch 14, 15 oder 16, d a d u r c h
g e k e n n z e i c h n e t, daß es bei einer
Temperatur und einem Druck durchgeführt wird, z.B.
zwischen 400° C und 800° C und 1 bis 4 bar,
insbesondere bei ca. 420° C und 1,5 bar, so daß
zumindest teilweise ein Cracken der langkettigen
Kohlenwasserstoffmoleküle erfolgt.

- Beschreibung -

116

Fig. 1

Fig. 2

Fig. 3a

Fig. 3b

Fig. 3c

Fig. 3d

0073290

3/6

Fig. 4

0073290

4/6

Fig. 5

Fig. 6

62

63

54 53 55

54 53 55

57 58 56

64

65

60 61 59

**Fig. 8**

**Fig. 9**

52

51

**Fig. 7**

0073290

6/6

69

66

67

69

67

68

Fig. 10

71

70

72

Fig. 11